# FASCICULE DE BREVET EUROPEEN

(11) **EP 2 459 781 B1**
(45) Date de publication et mention de la délivrance du brevet: **12.06.2013**
(21) Numéro de dépôt: 10762721.8
(22) Date de dépôt: 29.07.2010
(51) Int. Cl.: C25D 9/08, C25D 5/50, F01D 5/28

(54) **MÉTHODE DE FABRICATION D'UNE BARRIÈRE THERMIQUE**
HERSTELLUNGSVERFAHREN EINER WÄRMEDÄMMSCHICHT
METHOD OF MANUFACTURING A THERMAL BARRIER

(30) Priorité: 30.07.2009 FR 0955369
(43) Date de publication de la demande: 06.06.2012
(73) Titulaire: Snecma, 75015 Paris (FR); Universite De La Rochelle, 17071 La Rochelle (FR)
(72) Inventeur: PEDRAZA DIAZ, Fernando, F-17000 La Rochelle (FR); BOUCHAUD, Baptiste, F-16220 St Sornin (FR); BALMAIN, Josseline, F-17000 La Rochelle (FR); BONNET, Gilles, F-17000 La Rochelle (FR); MENUEY, Justine, F-86100 Chatellerault (FR)
(74) Mandataire: Cardy, Sophie Marie
(86) Numéro de dépôt international: PCT/FR2010/051614
(87) Numéro de publication internationale: WO 2011/012819

(56) Documents cités:
- WO-A1-02/14586
- WO-A1-2007/015692
- WO-A2-02/29134
- US-A1- 2004 016 646
- US-A1- 2004 026 260

## Description

La présente invention concerne une méthode de fabrication d'une barrière thermique comprenant une couche de revêtement céramique et recouvrant un substrat, en particulier un substrat destiné à des applications à haute température, en particulier dans le domaine aéronautique.

Une telle couche de revêtement céramique est notamment utilisée en particulier à titre de barrière thermique : grâce aux propriétés d'isolation thermique (très faible conductivité thermique), il est possible d'abaisser la température de fonctionnement du substrat sous-jacent d'un gradient de température qui peut dépasser 100°C.

Par ailleurs, des couches métalliques sont utilisées, soit seules soit comme sous-couche entre le substrat et la couche de revêtement céramique, pour leurs propriétés de résistance à la corrosion par oxydation à chaud, en particulier lorsque ces couches métalliques comportent de l'aluminium qui engendre par oxydation une couche d'alumine α-Al₂O₃ protectrice notamment sous conditions de faible pression partielle de dioxygène et/ou à de températures supérieures à 1000°C sous pression atmosphérique. On peut en particulier mentionner les couches d'aluminiures et d'alliages de type MCrAlY, M étant un métal choisi parmi le nickel, le cobalt, le fer ou un mélange de ces métaux. Une telle oxydation s'effectue notamment de façon naturelle à l'air à des températures élevées.

On connaît à l'heure actuelle plusieurs méthodes pour fabriquer de telles couches céramiques ou métalliques.

La méthode de dépôt chimique en phase vapeur (dénommée CVD) est une méthode de dépôt de films minces, à partir de précurseurs gazeux. Elle présente l'avantage d'être relativement économique et de permettre une distribution homogène ainsi qu'un contrôle de l'épaisseur de la couche de revêtement. Par contre, cette méthode de fabrication utilise des espèces polluantes (précurseurs/activateurs) et nécessite un traitement ultérieur de ces déchets. En outre, les températures d'élaboration sont relativement élevées et le temps de fabrication de la couche de revêtement est de l'ordre de plusieurs heures, au moins trois heures, pour des applications à des pièces thermomécaniques dans des domaines tels que l'aéronautique.

Les couches de revêtement déposées sur des substrats selon cette technique sont classiquement des couches d'aluminiures. Pour améliorer la durée de vie et les performances des substrats avec leurs couches de revêtement, on a proposé en particulier d'améliorer l'adhérence de la couche d'oxydes protecteurs par platinisation des couches d'aluminiures. Cependant, le platine est une matière première très onéreuse et la platinisation induit un certain nombre d'opérations supplémentaires avant l'aluminisation, ce qui augmente davantage les coûts de production.

Les techniques de projection thermique consistent en l'envoi d'un gaz vecteur servant à accélérer et transporter jusqu'au substrat de fines particules (typiquement 5 à 100 micromètres) qui peuvent être à l'état liquide, pâteux voir solide. Ce gaz vecteur peut être aussi source enthalpique, permettant de chauffer ces particules jusqu'au point de fusion (notamment dans le cas de la projection plasma). De manière générale, les techniques de projection sont directionnelles, c'est-à-dire qu'elles envoient un jet suivant un axe linéaire, de sorte que cette technique nécessite la mise en oeuvre de systèmes automatisés ou des post-traitements coûteux destinés à projeter et/ou égaliser la couche projetée sur toutes les parties d'un substrat de forme géométrique complexe. En outre, cette technique de projection utilise des poudres fabriquées par des procédés polluants, en particulier par atomisation sous vide.

Les couches de revêtement déposées sur des substrats selon cette technique sont classiquement des couches MCrAlY, par exemple FeCrAlY, CoCrAlY ou NiCoCrAlY. Ces éléments nécessitent, pour être déposés, d'être thermiquement et chimiquement compatibles avec le substrat.

On connaît également la technique d'ajout d'éléments réactifs sous forme métallique à la surface d'un alliage ou d'un revêtement par implantation ionique. Cette technique, relativement coûteuse, nécessite l'emploi d'un accélérateur de particules et d'une enceinte sous vide, ce qui limite la taille des pièces/substrats pouvant être implantées et ne permet qu'un dopage superficiel, de l'ordre de 0,05 à 0,5 µm. La géométrie des pièces/substrats doit aussi être simple, essentiellement plane.

Il est également possible de former cette couche en appliquant une suspension aqueuse ou organique (« *slurry* » ou sol-gel) formant une peinture qui peut être appliquée au pinceau, à la brosse, ou bien en immergeant les pièces (« dipping ») et qui est ensuite vaporisée. Cependant, dans ce cas, on utilise des liants, notamment organiques, qui libèrent des éléments volatiles éventuellement nocifs. En outre, afin d'obtenir une épaisseur suffisante pour la couche de revêtement, il est nécessaire de réaliser l'application de la suspension à plusieurs reprises successives, ce qui engendre un procédé relativement long à mettre en oeuvre compte-tenu des étapes de séchage intermédiaires. De plus, il est difficile d'appliquer de façon homogène une telle suspension sur des pièces de forme complexe.

On comprend, en outre, que ces différentes techniques de l'art antérieur entraînent, au cours de la formation de la couche de revêtement, le cas échéant, l'obstruction au moins partielle des trous de refroidissement de la pièce à revêtir.

Les documents WO2004/026260, WO02/29134 et WO02/14586 portent sur des méthodes de fabrication de couches de céramique par électrodéposition cathodique sur un substrat. Ces couches servent de protection contre la corrosion mais ne constituent pas des couches de barrière thermique.

La présente invention entend pallier aux inconvénients des méthodes de fabrication d'une couche de revêtement pour substrats/pièces de forme complexe en proposant une méthode simple, économique et non polluante pour obtenir une barrière thermique avec une couche de revêtement sensiblement uniforme et présentant des propriétés convenant aux applications envisagées.

Ainsi, l'invention concerne une méthode de fabrication d'une barrière thermique comprenant une couche de revêtement céramique et recouvrant au moins une partie de la surface d'un substrat, dans lequel la couche de revêtement est déposée sur le substrat uniquement par un procédé d'électrodéposition cathodique (ou CELD pour *« Cathodic ELectroDeposition* ») entre au moins une cathode et une anode, le substrat étant formé dans un matériau conducteur des électrons et constituant la cathode.

Selon l'invention, l'électrolyte comprend au moins un sel parmi le groupe comprenant les sels de lanthanides, d'yttrium, de zirconium et d'hafnium de sorte que par le procédé d'électrodéposition la couche de revêtement comporte au moins un oxyde parmi le groupe comprenant les oxydes de lanthanides, d'yttrium, de zirconium et d'hafnium et la méthode de fabrication comprend en outre une étape de traitement thermique de la couche de revêtement céramique entre 400°C et 2000°C pendant une durée d'au moins 10 minutes.

Cette méthode permet de former une couche de revêtement, soit directement sur le substrat constituant le matériau de la pièce, soit sur une sous-couche recouvrant la pièce et constituant alors le substrat à recouvrir.

Il est également possible de ne recouvrir qu'une partie de la surface du substrat, par exemple en utilisant un masque dans la ou les zones sur lesquelles on ne souhaite pas déposer la couche de revêtement, ou bien par électrodéposition locale.

Il est également possible de prévoir que pour la réalisation complète du revêtement, on dépose ensuite, après la mise en oeuvre de la méthode de fabrication conforme à l'invention par laquelle on forme une couche de revêtement, une autre ou plusieurs autres couches, notamment par les techniques de dépôt de l'art antérieur rappelées ci-dessus.

Une telle méthode de fabrication d'une couche de revêtement selon l'invention est particulièrement écologique et économique (temps court de réalisation, réalisation sous pression atmosphérique évitant les matériels de mise sous vide) par rapport à des techniques de dépôt en phase vapeur ou de projection thermique. De cette façon, il est possible de revêtir des pièces non revêtues jusqu'alors.

En outre, la mise en oeuvre de la méthode de fabrication selon la présente invention est compatible avec des pièces percées : la géométrie des lignes de courant empêchant tout dépôt significatif dans les trous, en particulier des trous de refroidissement de petite taille qui ne sont ainsi pas obstrués.

Egalement, il faut noter que l'emploi d'une telle méthode évite le recours à des produits chimiques dangereux ainsi que la production de déchets toxiques.

Enfin, la méthode de fabrication selon la présente invention est simple à mettre en oeuvre : on place de préférence l'électrolyte, la cathode (pièce à revêtir) et l'anode dans une unique cuve.

Parmi les sels de lanthanide, on choisit de préférence le cérium, ou bien encore le lanthane et/ou le gadolinium, mais il est possible d'utiliser également l'un parmi les autres lanthanides, à savoir praséodyme, néodyme, prométhium, samarium, europium, terbium, dysprosium, holmium, erbium, thulium, ytterbium et lutécium.

Selon une disposition préférentielle, on utilise soit uniquement, soit essentiellement un ou plusieurs sels de cérium, de façon à conduire à la formation d'une couche de céramique qui est formée d'une base d'oxydes de cérium.

Par l'expression « base d'oxydes de cérium », on entend que la couche de céramique présente comme constituant majoritaire, et éventuellement unique, des oxydes de cérium, et en particulier Ce₂O₃ et/ou CeO₂.

Selon une disposition préférentielle, ledit électrolyte comporte au moins deux sels parmi le groupe comprenant les sels de lanthanides, d'yttrium, de zirconium et d'hafnium de sorte que par le procédé d'électrodéposition la couche de revêtement comporte au moins deux oxydes parmi le groupe comprenant les oxydes de lanthanides, d'yttrium, de zirconium et d'hafnium.

De cette façon, on réalisa la co-déposition d'oxo-hydroxydes de terre rare mixtes en une seule étape (par exemple cérium et lanthane, ou encore cérium et lanthane et gadolinium, etc.).

Selon une autre disposition préférentielle, ledit électrolyte comporte au moins du sel de cérium de sorte que par le procédé d'électrodéposition la couche de revêtement comporte au moins de l'oxyde de cérium. Cette disposition s'applique dans le cas où l'électrolyte comporte un seul, deux ou davantage de sels parmi le groupe comprenant les sels de lanthanides, d'yttrium, de zirconium et d'hafnium.

De préférence, ledit substrat est formé dans un matériau appartenant au groupe comprenant les superalliages, les superalliages à base de nickel, les superalliages à base de cobalt, le titane et ses alliages, les composés intermétalliques à base d'aluminiures et/ou de siliciures, les composites à matrice métallique, les composites à matrice céramique et les composites à matrice organique.

Si le substrat est à base d'aluminiure(s), on choisit en particulier l'un des aluminiures suivants, ou un mélange d'entre eux : aluminiure de nickel, de cobalt, de fer, de titane, de ruthénium ou de platine. Si le substrat est à base de siliciure(s), on choisit en en particulier l'un des siliciures suivants, ou un mélange d'entre eux : siliciure de molybdène ou de fer.

D'autres caractéristiques et avantages de l'invention apparaîtront mieux à la lecture de la description qui suit de plusieurs modes préférés de réalisation de l'invention donnés à titre d'exemples non limitatifs. La description se réfère aux dessins annexés sur lesquels :
- la figure 1 représente schématiquement un montage pouvant être utilisé pour la mise en oeuvre de la méthode de fabrication selon l'invention,
- les figures 2 à 4 sont des vues micrographiques de la surface d'une couche de revêtement obtenue selon la méthode de fabrication de la présente invention, en utilisant des densités de courant différentes,
- les figures 5 et 6 sont des vues micrographiques de la surface d'une couche de revêtement obtenue selon la méthode de fabrication de la présente invention, en utilisant des formulations différentes de sels contenus dans l'électrolyte,
- les figures 7 à 9 sont des coupes micrographiques représentant la couche de revêtement déposée à la surface du substrat, respectivement sans traitement thermique, avec un premier traitement thermique et avec un deuxième traitement thermique,
- la figure 10 représente le comportement à l'oxydation isotherme, par analyse thermogravimétrique, d'un substrat nu et d'un substrat revêtu selon différentes alternatives, et
- la figure 11 représente le comportement à l'oxydation cyclique, par analyse gravimétrique, d'un substrat nu et d'un substrat revêtu selon différentes alternatives.

L'installation d'électrodéposition 20 pouvant être utilisée comporte une unique cuve 22 remplie d'électrolyte 24 dans laquelle est plongée la pièce formant le substrat à recouvrir et qui sert de cathode 26 (électrode de travail). Une anode 28 (ou contre-électrode) est également immergée dans l'électrolyte 24. Cette anode 28 est constituée en un matériau chimiquement inerte par rapport au bain électrolytique (électrolyte), par exemple sous la forme d'une grille de platine, et est positionnée de manière à créer des lignes de courant homogènes au niveau du substrat (cathode 26).

Avantageusement, le procédé d'électrodéposition utilise en outre une électrode de référence 30, qui est placée à proximité de la cathode 26, et ce pour minimiser les effets de résistance de l'électrolyte 24 et pour permettre un meilleur contrôle lors de l'électrodéposition. Cette électrode de référence 30 est de préférence constituée d'une électrode au calomel saturée ECS (chlorure mercureux Hg₂Cl₂).

Cette installation d'électrodéposition 20 à trois électrodes permet le suivi in-situ précis de la densité de courant et de la tension simultanément à la réalisation de la couche de revêtement.

Les trois électrodes (cathode 26, anode 28 et l'électrode de référence 30) sont reliées à une source de courant électrique 32 couplée à un système de contrôle et d'acquisition des données 34.

Selon une première alternative, on utilise le mode potentiostatique, dans lequel la source de courant électrique 32 impose entre l'anode 28 et la cathode 26 une tension (potentiel ou voltage). Dans ce cas, la source de courant électrique 32 est un potentiostat et le procédé d'électrodéposition est effectué par application d'une tension entre la cathode 26 et l'anode 28. De préférence, la tension appliquée entre la cathode 26 et l'anode 28 est comprise entre -30 et +30 V (volts), de préférence entre -2,5 et +2,5V.

Selon une deuxième alternative, préférentielle, on utilise le mode galvanostatique, dans lequel la source de courant électrique 32 impose entre l'anode 28 et la cathode 26 une densité de courant. Dans ce cas, la source de courant électrique 32 est un galvanostat et le procédé d'électrodéposition est effectué par application d'une densité de courant entre la cathode 26 et l'anode 28. De préférence, la densité de courant appliquée entre la cathode 26 et l'anode 28 est comprise entre -0,5 et -5 mA/cm² (milliampère par centimètre carré), de préférence entre -0,5 et -2 mA/cm².

L'électrolyte contient la (ou les) espèces à déposer sur la cathode, sous la forme de sels dissouts dans cet électrolyte 24. L'application d'une densité de courant ou d'un potentiel électrique permet la réduction des espèces avec lesquelles on va former la couche de revêtement de céramique à l'interface (couche de diffusion) entre le volume d'électrolyte et la surface de la cathode 26 (substrat).

On peut obtenir des caractéristiques homogènes ou en gradient dans l'épaisseur du dépôt (composition, microstructure, caractéristiques cristallographiques....).

Les sels sont composés d'une ou de plusieurs espèces anioniques et/ou cationiques, en particulier de nitrates, de sulfates, de chlorures ou d'acétate, avec une préférence pour les nitrates. Ainsi, de préférence, l'électrolyte comprend des sels de nitrate, en particulier de nitrate de cérium, en concentration supérieure ou égale à 0,05 mole par litre. On peut prévoir des sels de nitrate en concentration supérieure ou égale à 0,1 mole par litre.

La ou les espèces cationiques de la couche de revêtement électrodéposée appartiennent au groupe formé des espèces de la série des lanthanides, de l'yttrium, du zirconium et de l'hafnium. On utilise de préférence le cérium (seul ou comme base) ou toute combinaison incluant le cérium. L'utilisation du lanthane ou du gadolinium est également privilégiée.

Cet électrolyte 24 présente une composition et une concentration qui est dépendante de la quantité de sel dissout dans le solvant. En particulier, l'électrolyte 24 présente une forte conductivité ionique, entre 25 et 1000 mS.m²/mol (milliSiemens mètre carré par mole), de préférence entre 150 et 500 mS.m²/mol.

L'électrolyte 24 est une solution relativement concentrée d'un ou plusieurs sels contenant un ou plusieurs lanthanides et/ou yttrium et/ou zirconium et/ou hafnium. Ainsi, on prévoit une concentration totale de l'électrolyte 24 comprise entre 0,05 et 5 moles par litre.

De préférence, les sels de lanthanides, d'yttrium, de zirconium et d'hafnium se présentent initialement dans l'électrolyte à une concentration comprise entre 0,05 et 5 moles par litre, de préférence entre 0,1 et 0,3 moles par litre.

Le solvant de l'électrolyte 24 est à base aqueuse ou une solution alcoolique (éthanol) ou encore à base de cétone, d'ester ou d'aldéhyde, ou bien un mélange entre deux d'entre eux. On préfère un électrolyte avec un solvant à base aqueuse qui est moins polluant et plus facile à régénérer.

De préférence, la température de l'électrolyte 24 est comprise entre 4°C et 100°C, et de préférence entre 15°C et 25°C (température ambiante) afin d'éviter de fortes évaporations et de consommer moins d'énergie à maintenir la température de l'électrolyte 24. En outre, une telle gamme de température permet d'obtenir des tailles de cristaux et une concentration en lacunes d'oxygène optimales pour des applications contre l'oxydation à haute température et/ou des applications de barrière thermique.

De préférence, le pH de l'électrolyte 24 est inférieur à 7, voire nettement acide entre 2,5 et 5,5.

De façon complémentaire, mais non nécessaire, l'électrolyte 24 comprend en outre un ou plusieurs additifs et/ou tensioactifs.

La cuve 22 comprenant l'électrolyte et les trois électrodes 26, 28 et 30 est en contact avec l'air ambiant à pression atmosphérique. Cette cuve 22 est inerte vis-à-vis de l'électrolyte 24. Une légère agitation de l'électrolyte 24 est possible.

De préférence, l'électrodéposition dure au plus 1 heure. Cette durée est de préférence comprise entre 10 et 30 minutes, et de préférence entre 15 et 25 minutes. Ainsi, la mise en oeuvre de la méthode de fabrication selon l'invention est relativement rapide.

Au cours de cette électrodéposition, on obtient une ou plusieurs réactions de réduction (1) à (4), qui produit(sen)t des ions hydroxyles OH⁻, en particulier à partir de l'oxygène O₂ et de l'eau H₂O de l'électrolyte 24 :

2H₃O⁺ + 2e⁻ → H₂ + 2 H₂O (1)

2 H₂O + 2e⁻ → H₂ + 2 OH⁻ (2)

O₂ +2 H₂O + 4e⁻ → 4 OH⁻ (3)

O₂ +2 H₂O + 2e⁻ → 2 OH⁻ + H₂O₂ (4)

Parfois, les anions du sel peuvent participer aux réactions cathodiques. Ainsi, dans le cas particulier des nitrates, les équations sont comme suit :

NO₃⁻ + 10 H⁺ + 8e⁻ -> NH₄⁺ + 3 H₂O (5)

NO₃⁻ + H₂O + 2e⁻ -> NO₂⁻ + 2 OH⁻ (6)

L'électrolyte 24 présentant un pH acide, la présence des cations H₃O⁺ et la formation des ions hydroxyles OH⁻ (base) peuvent également contribuer à la formation de composés contenant la base et les cations à déposer.

Ainsi, pour le cas particulier des espèces cations de cérium et des anions hydroxyles, la formation de Ce(OH)₃ et/ou de Ce(OH)₂²⁺ est favorisée, notamment par les réactions (7) à (9) :

Ce³⁺ + 3 OH⁻ -> Ce(OH)₃ (7)

4 Ce³⁺ + O₂ + 4 OH⁻ + 2 H₂O -> 4 Ce(OH)₂²⁺ (8)

2 Ce³⁺ + 2 OH⁻ + H₂O₂ → 2 Ce(OH)₂²⁺ (9)

Finalement, une déshydratation partielle et/ou une oxydation des composés électrodéposés peut se produire. Dans le cas particuliers des espèces comportant du cérium, l'oxydation de Ce³⁺ en Ce⁴⁺ peut se produire :

Ce(OH)₃ -> CeO₂ + H₃O⁺ + e⁻ (10)

Ce(OH)₂²⁺ → CeO₂ + 2 H₂O (11)

Les revêtements sont donc formés par électrogénération de base, par réaction avec les espèces cationiques présentes dans l'électrolyte soit par électrocristallisation, soit par précipitation.

La couche de revêtement résulte de la formation initiale d'un film de composition générale T(OH)_{z-x} (L)ₓ, Y H₂O, avec
T (terre rare) appartenant au groupe comprenant les lanthanides, l'yttrium, le zirconium et l'hafnium, et notamment de cérium seul ou en présence d'un autre oxyde de terre rare,
L un ligand (tel que le nitrate ou tout autre anion)
z nombre de charges positives du sel de départ
x nombre de charges négatives du ligand
Y nombre de molécules d'eau

Selon une autre disposition préférentielle, mais facultative, la méthode de fabrication selon l'invention comprend en outre une étape de séchage de la couche de revêtement. Une telle étape est réalisée de préférence à température ambiante pendant au moins 24 heures, et de préférence jusqu'à 48 heures.

De façon plus précise, une fois l'électrodéposition terminée, les pièces revêtues peuvent être rincées ou non à l'aide de différents solvants (eau, alcool, cétone, ester, aldéhyde) puis séchées ou non avec un flux d'air froid ou chaud ou d'autre gaz avec une puissance suffisamment basse pour éviter le détachement complet du revêtement du substrat ou bien être stocké pendant une certaine durée dans une enceinte en présence d'une substance hygroscopique ou toute autre méthode, comme par exemple la climatisation, pour évaporer au moins en partie l'humidité du revêtement. La méthode préférée est le rinçage à l'alcool suivi d'un premier séchage à l'aide d'un flux léger d'air chaud puis un deuxième séchage par stockage sous pression réduite (dans un dessiccateur de préférence au moins 24 h).

Selon une autre disposition préférentielle, mais facultative, après ou non une étape de séchage, la méthode de fabrication selon l'invention comprend en outre une étape de traitement thermique de la couche de revêtement à une température élevée, de préférence entre 400°C et 2000°C pendant une durée d'au moins 10 minutes.

La pression dans l'enceinte peut être partielle ou atmosphérique. L'atmosphère gazeuse dans l'enceinte peut être complètement ou partiellement oxydante et/ou neutre et/ou réductrice mais doit être en absence de toute substance corrosive telle que SO₂, HCl, etc. qui puisse donner lieu à la formation d'une substance dans le revêtement qui contienne d'autres espèces que l'oxygène, l'azote, le carbone, les lanthanides, l'Yttrium, le Zirconium, l'Hafnium ou toute combinaison de ces espèces (sous forme neutre, cationique, anionique, covalente ou métallique).

Dans ce cas, de préférence, le traitement thermique est réalisé sous pression atmosphérique d'argon en présence d'au moins 0,0001 bar d'oxygène, de préférence pendant 60 minutes à 1050 °C. Dans ce cas, on utilise de préférence une rampe de montée et descente en température de 5 °C/min.

Un tel traitement thermique additionnel de la pièce revêtue de la couche de revêtement permet de modifier et d'adapter précisément la composition, la microstructure, la structure cristalline et/ou l'épaisseur de la couche de revêtement. Une telle adaptation permet d'améliorer la ou les propriétés correspondantes à l'application recherchée, telles que la résistance à l'oxydation cyclique, la résistance à l'oxydation isotherme, une réduction de la conductivité thermique, moins de dépendance à la présence d'une couche d'alumine obtenue par oxydation naturelle, et une meilleure tenue aux dépôts de sels fondus ou « CMAS » (pour « CaO-MgO-Al₂O₃-SiO₂», à savoir des compositions d'oxydes contenant des oxydes de calcium, de magnésium, d'aluminium, de silicium, des mélanges des ces oxydes, résultant de l'ingestion de sable par le moteur et/ou de tout autre débris en provenance de la partie amont du moteur).

De cette façon, grâce à la méthode de fabrication selon l'invention, on obtient le dépôt d'une couche de revêtement sous la forme d'un composé de nature céramique (et non métallique, car il ne s'agit pas d'une métallisation comme le phénomène résultant d'une électrodéposition conventionnelle).

En effet, les couches de revêtements obtenues grâce à la méthode de fabrication selon l'invention présentent une composition à base d'oxydes (de lanthanides et/ou d'yttrium et/ou de zirconium et/ou d'hafnium) contenant une proportion variable d'eau (hydroxydes métalliques), et qui comporte en outre des anions hydroxyles ou tout autre anion produit à partir des sels et des solvants.

Ainsi, outre un oxyde appartenant au groupe formé des oxydes de lanthanides, d'yttrium, de zirconium et d'hafnium, la couche de revêtement comporte en outre au moins un hydroxyde métallique de formule Mₓ(OH)_{y} (M étant le métal lanthanide, yttrium, zirconium et/ou hafnium, x la charge négative de l'anion hydroxyle OH- et y le nombre de charges positives du métal lanthanide, yttrium, zirconium et/ou hafnium) et au moins un anion hydroxyle (OH⁻).

De façon plus spécifique, la couche de revêtement comporte, après séchage et/ou traitement thermique un oxohydroxyde métallique de formule MO.OH dans lequel M est un métal lanthanide, l'yttrium, le zirconium et/ou l'hafnium, et de préférence le cérium.

Les couches de revêtements peuvent présenter une composition variable contenant un ou plusieurs éléments parmi le groupe formé des lanthanides, de l'yttrium, du zirconium et de l'hafnium ; mais également de l'oxygène, de l'azote, du carbone (ou toute autre espèce contenu dans le contre-ion de l'électrolyte) ; ainsi que du nickel et/ou de l'aluminium et/ou du chrome et/ou du cobalt et/ou du titane et/ou du tungstène et/ou du tantale et/ou du molybdène et/ou du rhénium et/ou du ruthénium et/ou du niobium et/ou du silicium et/ou du fer et/ou du manganèse et/ou du platine et/ou du palladium et/ou de l'iridium.

Selon une disposition avantageuse, la couche de revêtement est formée d'une base d'oxyde(s) de cérium, éventuellement complétée par au moins un autre oxyde de terre rare qui forme un stabilisant (dopant).

Quant à leur structure, les couches de revêtements obtenues grâce à la méthode de fabrication selon l'invention, celle-ci peut être amorphe et/ou cristalline et/ou nanométrique (taille des éléments de l'ordre du nanomètre). En général, les couches de revêtement présentent un pourcentage minimal de phase cristalline avec une taille des cristaux dans le domaine nanométrique.

Selon le choix des paramètres de l'électrodéposition, les couches de revêtements obtenues grâce à la méthode de fabrication selon l'invention présentent des propriétés de résistance à l'oxydation à haute température et/ou un effet de barrière thermique et/ou un effet de captation d'espèces nocives.

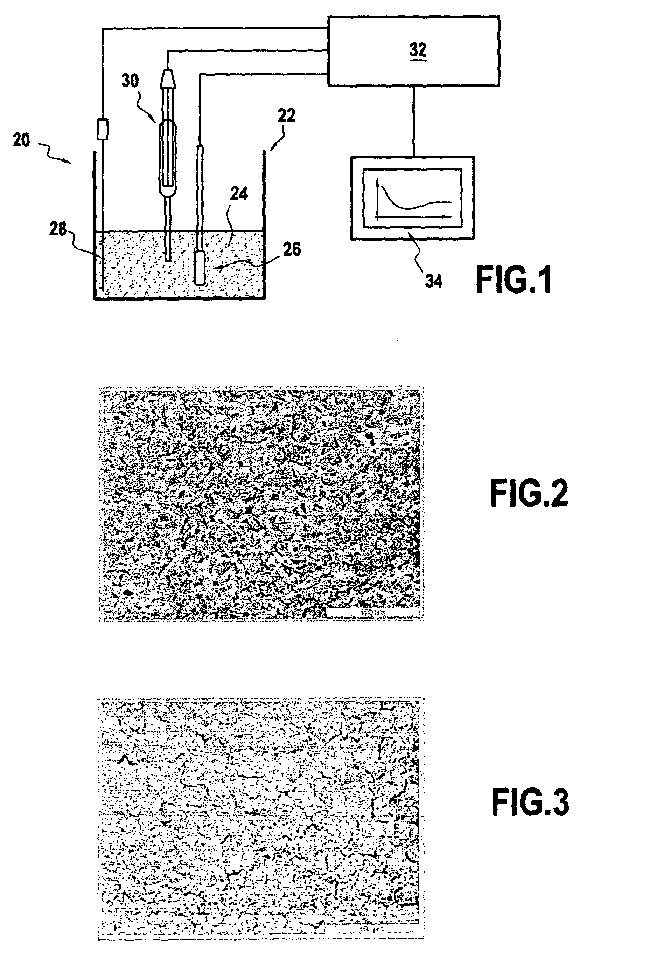

Dans tous les cas, une morphologie spécifique, consistant en une microstructure faïencée dite « en boue sèche » contenant des pores (et éventuellement des fissures) peut être observée sur la face extérieure de la couche de revêtement obtenue selon la méthode de fabrication de la présente invention (figures 2 à 6).

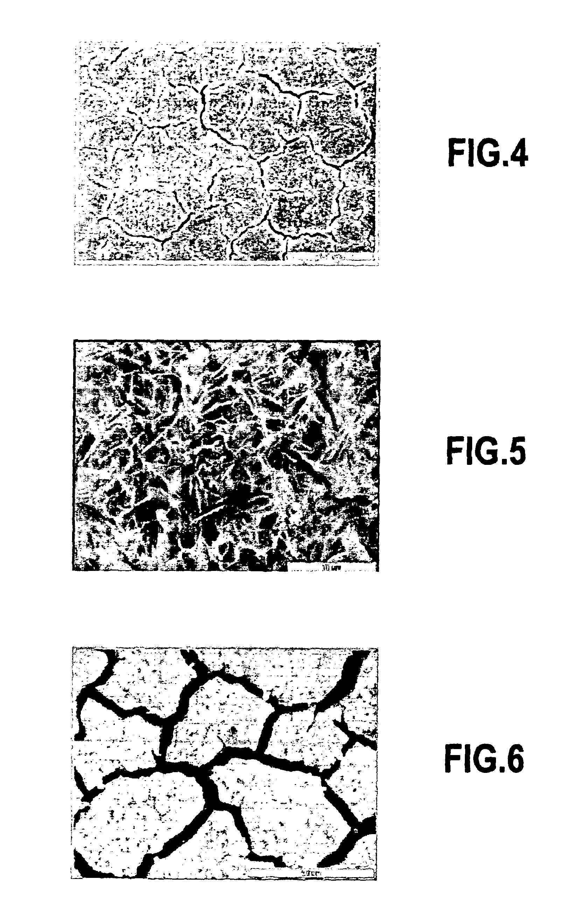

Comme on peut le voir sur les figures 2 à 4 montrant la surface d'une couche de revêtement formée uniquement à base d'oxydes de cérium (avec séchage), avec des densités de courant différentes allant en augmentant entre la figure 2 et la figure 4, il est possible d'obtenir des morphologies différentes(-0,5 mA/cm² pour la figure 2, -1 mA/cm² pour la figure 3 et -1,5 mA/cm² pour la figure 4).

En outre, l'augmentation de la densité de courant utilisée fait apparaître des fissures (figures 3 et 4) dont la taille (longueur, largeur, et profondeur) va en augmentant.

La variation de la densité de courant modifie en outre les compositions à la surface de la couche de revêtement : l'application d'une densité de courant plus faible engendre un taux plus élevé d'éléments du substrat présents dans le revêtement car il présente une épaisseur plus faible, par rapport à des densités de courant plus élevées, tout spécialement le nickel pour les substrats à base d'alliage de nickel.

L'épaisseur du dépôt augmente également avec la densité de courant appliquée et avec le temps de déposition.

Un maximum de 35 % atomique de terre rare a été constaté avec les densités de courant maximales.

Sur la figure 5 représentant également une couche de revêtement formée uniquement à base d'oxydes de cérium, le plus fort grossissement laisse ressortir un enchevêtrement de structures aciculaires sur la face extérieure de la couche de revêtement. Par « structure aciculaire », on entend une structure dont les constituants micrographiques apparaissent en forme d'aiguille sur une coupe métallurgique, par la présence d'une morphologie allongée dans une direction privilégiée de l'espace des éléments composant la structure.

Par comparaison, la figure 6 montre que pour une couche de revêtement formée d'oxyde mixte (en l'espèce des oxydes de cérium et de gadolinium), une microstructure nodulaire peut apparaître sur la face extérieure de la couche de revêtement. Par microstructure nodulaire, on entend la présence de constituants micrographiques de forme ronde irrégulière, par la présence d'une morphologie arrondie sans allongement préférentiel des éléments composant la structure.

La couche de revêtement résultant de la méthode de fabrication de la présente invention croît couche après couche et présente un certain nombre de particularités.

En particulier, cette couche de revêtement présente une concentration notable en lacunes d'oxygène, en particulier une concentration en lacunes d'oxygène supérieure ou égale à 1.10¹⁷ lacunes/cm³, de préférence supérieure ou égale à 10.10²⁰ lacunes/cm³.

En outre, cette couche de revêtement présente une structure poreuse avec une pluralité de fissures débouchantes.

Dans le cadre de la présente invention, on recherche la présence de telles fissures, car elle joue plusieurs rôles. En particulier, la présence de fissures permet d'éviter le détachement de la couche de revêtement (de nature céramique) du substrat (en général de nature métallique) suite aux différents coefficients d'expansion thermique, notamment lors du cyclage thermique. En outre, la présence de ces fissures permet un accès limité à l'oxygène environnant, à travers la couche de revêtement, jusqu'au substrat.

En particulier, la distance entre deux fissures voisines est comprise entre 5 et 50 µm et lesdites fissures présentent une largeur l comprise entre 1 et 25 µm.

La plupart du temps, et en particulier lorsque soit le substrat, soit la couche de revêtement comporte de l'aluminium, une fine couche d'oxyde protectrice (en particulier une couche d'alumine) contre l'oxydation ou la corrosion à chaud se forme à l'interface entre la couche de revêtement et le substrat. Une telle couche d'oxyde protectrice peut être générée par oxydation du substrat. Cette couche d'oxyde protectrice contient de l'aluminium, des terres rares (lanthanides et/ou yttrium et/ou zirconium et/ou hafnium) et de l'oxygène.

Cette couche de revêtement présente une épaisseur d'au moins 5 micromètres.

Avec un traitement thermique additionnel de la pièce revêtue de la couche de revêtement, on réalise la déshydratation de la couche de revêtement et on permet de modifier la microstructure et/ou l'épaisseur et/ou la composition de la couche de revêtement.

En particulier, avec des températures de traitement thermique relativement modérées, notamment des températures inférieures à 900°C, la microstructure faïencée est maintenue, la structure cristalline est davantage définie, l'épaisseur du dépôt diminue, le taux de terre rare en surface diminue et les éléments du substrat remontent dans la couche de revêtement.

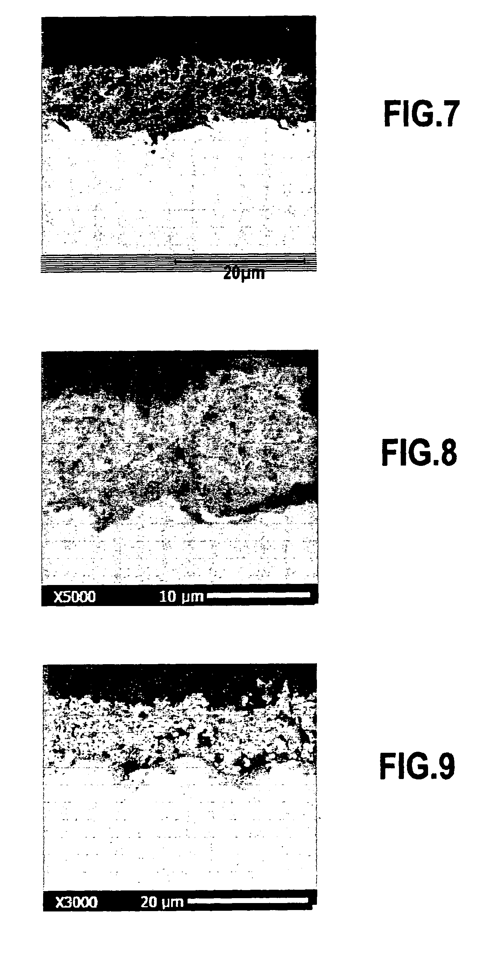

Ainsi, sur la figure 7, il s'agit d'une vue en coupe d'une couche de revêtement obtenue selon la méthode de la présente invention, formée uniquement à base d'oxydes de cérium CeO₂₋ₓ, sur un substrat de type superalliage monocristallin à base nickel, sans traitement thermique.

Sur la figure 8, il s'agit de la même couche de revêtement que celle de la figure 7, après un traitement thermique à température modérée (en l'espèce 900°C pendant 1 heure) à l'issue duquel l'épaisseur a diminué et la microstructure aciculaire est maintenue.

Si l'on utilise des températures de traitement thermiques plus importantes, notamment des températures supérieures à 900°C, la microstructure devient nodulaire, l'épaisseur du dépôt diminue davantage et la couche d'oxyde développée à l'interface est plus épaisse.

Ainsi, sur la figure 9, il s'agit de la même couche de revêtement que celle de la figure 7, après un traitement thermique à température élevée (en l'espèce 1050°C pendant 1 heure) à l'issue duquel l'épaisseur de la couche de revêtement a diminué et une microstructure nodulaire est apparue.

Afin de promouvoir la formation de la couche d'oxyde protectrice, on utilise une atmosphère oxydante pour réaliser le traitement thermique. Un traitement thermique sous pression réduite d'air est donc préféré.

A cet effet, selon un traitement thermique préférentiel, on place la pièce revêtue de la couche de revêtement dans une enceinte à température ambiante, puis on fait le vide jusqu'à 5.10⁻² mbar, avant de réaliser la montée en température à 5°C/min sous un flux d'argon à pression atmosphérique jusqu'à 1050°C, de réaliser le traitement à cette température pendant une heure sous argon à 1 bar, puis de réaliser la descente en température à 5°C/min sous un flux d'argon jusqu'à la température ambiante. Il s'agit d'un traitement thermique effectué sous argon, sous pression réduite d'oxygène (présence d'oxygène résiduel d'au moins 0,0001 bar, soit 10 pascals) pour favoriser l'oxydation.

La couche de revêtement de la figure 9 a bénéficié d'un tel traitement thermique.

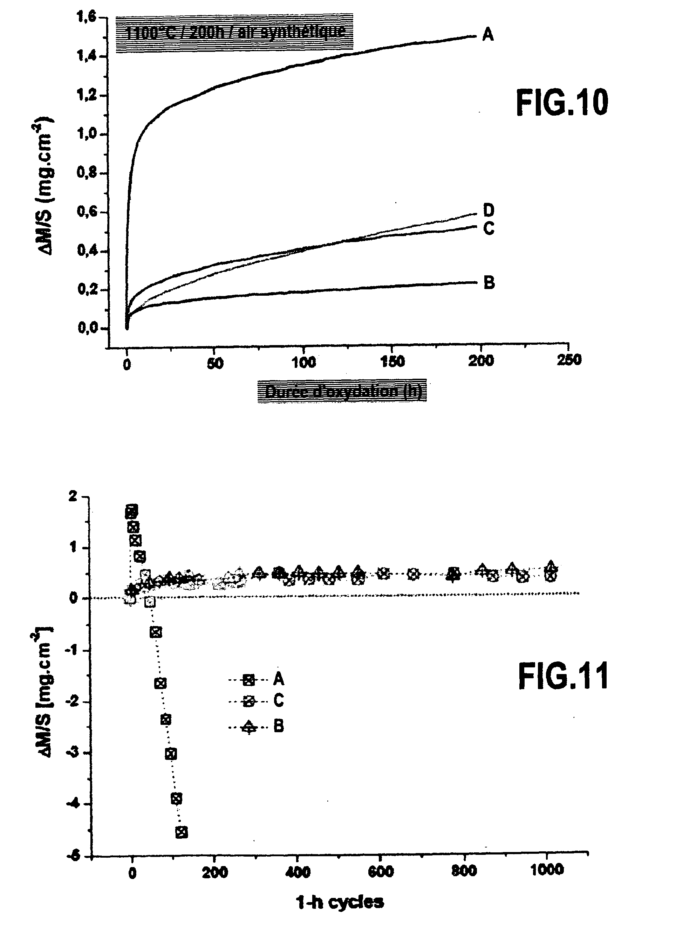

On se réfère maintenant aux figures 10 et 11 illustrant respectivement les performances à l'oxydation isotherme et cyclique d'un substrat nu et d'un substrat revêtu selon différentes alternatives. Sur la figure 10, le gain de masse par unité de surface (mg.cm²) est mesuré en fonction du temps d'oxydation à 1100°C sous pression atmosphérique d'air. Sur la figure 11, le gain de masse par unité de surface (mg.cm²) est mesuré en fonction du nombre de cycles d'oxydation cyclique à 1100°C sous pression atmosphérique d'air.

Les courbes A concernent un substrat nu de type superalliage monocristallin à base nickel. Les courbes B concernent le même substrat revêtu d'un aluminiure de nickel déposé par la technique d'Aluminisation Phase Vapeur (APV) (substrat aluminisé). Les courbes C concernent le même substrat revêtu d'une couche de revêtement formée d'oxydes de cérium obtenue par électrodéposition cathodique et traitement thermique. Enfin, sur la figure 10, la courbe D est relative à une pièce avec le même substrat revêtu d'un aluminiure de nickel (sous-couche) recouvert d'une couche de revêtement formée d'oxydes de cérium obtenue par électrodéposition cathodique et traitement thermique.

Il peut être observé sur les figures 10 et 11 que la couche de revêtement (courbe C) confère une protection à l'oxydation (isotherme ou cyclique) à haute température similaire à celle d'une aluminisation (courbe B). Ainsi, on réduit notablement les cinétiques d'oxydation par rapport à un substrat nu (courbe A).

La présence des lacunes d'oxygène permet cette résistance à l'oxydation à haute température en contribuant à la formation de la couche d'oxyde protectrice (en particulier l'alumine) à l'interface entre la couche de revêtement et le substrat, cette couche d'oxyde arrêtant ensuite partiellement l'entrée de l'oxygène à cette interface.

C'est lors de cette formation de la couche d'alumine, par l'entrée de l'oxygène à l'emplacement des lacunes, que se produit le gain de masse plus important constaté pour la courbe C par rapport à la courbe B.

Sur la figure 11, on voit que la résistance cyclique à l'oxydation est aussi bonne avec la couche de revêtement (courbe C) qu'avec une aluminisation (courbe B), et qu'elle est bien supérieure à celle d'un substrat nu.

On a constaté l'évolution de la microstructure et l'apparition d'une microstructure nodulaire pendant l'oxydation isotherme (figure 10) ou cyclique (figure 11).

Il est à noter que selon l'invention, il est possible de prévoir le dépôt par électrodéposition cathodique de la couche de revêtement formée d'oxydes (notamment de cérium), avant ou après le dépôt en phase vapeur (CVD, ou autre telle technique et notamment APV) d'une couche d'aluminiure (notamment de nickel).

On va maintenant présenter les aspects préférentiels du protocole de mise en oeuvre de la méthode de fabrication selon la présente invention, en fonction de la (ou des) propriétés(s) spécifique(s) que l'on recherche pour la couche de revêtement.

### Application 1 : anti oxydation et/ou anticorrosion à haute température

Dans ce cas, le bain utilisé est un bain aqueux de nitrate de cérium Ce(NO₃)₃,6H₂0 à 0,1 mol.L⁻¹ sans agitation. Le temps de réalisation du dépôt par électrodéposition est compris de préférence entre 10 et 20 min pour obtenir des dépôts suffisamment épais. La densité de courant est comprise de préférence entre -0,5 mA.cm⁻² et -1,5 mA.cm⁻² afin d'obtenir les caractéristiques souhaitées du revêtement de céramique (taille de faïençage, microstructure, largeur de fissures). Les dépôts sont rincés à l'éthanol puis séchés à l'air chaud et enfin stockés pendant 48 h sous air sec dans un dessiccateur. Après cela, un traitement thermique est effectué. La procédure de traitement préférentiel est utilisée (1050 °C et 1 h sous flux d'argon).

### Application 2 Barrières thermiques

Dans ce cas, le temps de réalisation du dépôt par électrodéposition est compris de préférence entre 20 et 60 min pour des applications barrière thermique. La densité de courant appliquée est de préférence faible pour limiter la fissuration trop importante et des largeurs de fissures trop prononcées et est comprise entre -0,5 mA.cm⁻² et -2 mA.cm⁻². Les dépôts sont rincés à l'éthanol puis séchés à l'air chaud et enfin stockés pendant 48 h sous air sec dans un dessiccateur. Après cela, un traitement thermique est effectué. La procédure de traitement préférentiel est utilisée (1050 °C / 1 h sous flux d'argon).

Les microstructures de la couche de revêtement obtenue avec la méthode de fabrication selon l'invention présentant des pores et des fissures, on réalise une réduction supplémentaire de la conductivité thermique déjà basse de ce type de céramique.

### Application 3 : réduction émissions de gaz à effet de serre

Dans ce cas, le temps de réalisation du dépôt par électrodéposition est compris de préférence entre 20 et 60 min pour obtenir des dépôts relativement épais qui présentent une surface spécifique (d'échange) relativement importante pour jouer le rôle de captation des espèces nocives et polluantes. La densité de courant est comprise de préférence entre -0,5 mA.cm⁻² et -1,5 mA.cm⁻². Les dépôts présentent préférentiellement une fraction de lacunes égale et supérieure 1.10¹⁷ /cm³. Les dépôts sont rincés à l'éthanol puis séchés à l'air chaud et enfin stockés pendant 48 h sous air sec dans un dessiccateur. Après cela, un traitement thermique est effectué. La procédure de traitement préférentiel est utilisée (1050 °C / 1 h sous flux d'argon).

Cet effet de captation d'espèces nocives et polluantes qui permet de réduire les émissions de gaz à effet de serre (notamment émis par les moteurs d'avion) provient du fait que la couche de revêtement céramique/d'oxydes obtenue par le procédé selon l'invention comporte au moins un oxyde parmi le groupe comprenant les oxydes de lanthanides, d'yttrium, de zirconium et d'hafnium, lequel oxyde sert de catalyseur. En effet, du fait de sa composition et de sa densité élevée en lacunes, notamment en lacunes d'oxygène, il est possible de capter les gaz (tels que les hydrocarbures, monoxyde de carbone, oxydes d'azote, suies et autres composés des gaz d'échappement) et, par l'intermédiaire de réactions d'oxydo-réduction, d'éliminer au moins une partie des composés nocifs et/ou polluants, tout en renouvelant au moins une partie des ions susceptibles de réagir. Il faut également mentionner parallèlement les bonnes propriétés OSC (« Oxygen Storage Capacity ») de la couche de revêtement obtenue par le procédé selon l'invention car par la présence des lacunes d'oxygène, il s'ensuit un phénomène de capture de l'oxygène environnant qui non seulement agit dans le cadre de l'oxydation des gaz polluants, mais peut également agir par diffusion dans la couche de revêtement pour former une couche d'oxyde la plus stable thermodynamiquement.

On va maintenant présenter en détail le protocole relatif à la mise en oeuvre de la méthode de fabrication selon la présente invention, en fonction des types de substrats utilisés.

### EXEMPLE 1

On réalise une couche de revêtement CeO₂₋ₓ sur un substrat base nickel, en particulier un superalliage à base nickel, selon les étapes 1.1 à 1.13.

Préparation du bain électrolytique (ou électrolyte) :
1.1 : dissolution du sel de Ce(NO₃)₃, 6H₂O dans de l'eau à la concentration souhaitée ;
1.2 : stockage hermétique pour éviter le contact avec l'air et la possible oxydation partielle des cations métalliques (cas du cérium) ;
1.3 : préparation du bain électrolytique : il s'agit d'un bécher rempli avec 400 mL de solution à température ambiante sans agitation ;
1.4 : on utilise une cellule électrochimique conventionnelle à trois électrodes, à savoir une électrode de référence 30, une contre électrode large en platine (anode 28) assurant une bonne distribution des lignes de densité de courant sur toute la surface de l'échantillon à revêtir qui constitue lui-même l'électrode de travail (cathode 26).

Préparation de la pièce à revêtir :
1.5 : Préparation de surface en utilisant un sablage à l'alumine Al₂O₃ typique avant élaboration d'un dépôt de platine Pt pour aluminisation APV mais toute autre préparation n'est pas exclue (polissage mécanique, électrochimique, etc.) ;
1.6 : dégraissage des échantillons dans un solvant alcoolique de préférence (éthanol) / rinçage puis séchage à l'air chaud (50 < T < 200°C) ;
1.7 : fixation de la pièce/échantillon sur sa section (bord), pour ne pas perturber la formation du film sur toute la surface, à l'aide d'un système (type pince de contact ou autre) assurant le contact électrique et inerte (exemple : Pt) vis-à-vis du bain électrolytique d'électrodéposition.

Electrodéposition :
1.8 : La pince de contact est reliée au potentiostat (ou galvanostat) permettant de contrôler la consigne à appliquer (potentiel imposé ou courant imposé) et d'enregistrer la réponse du système lors de la polarisation (ceci permet le suivi in-situ) ;
1.9 : immersion de la pièce à revêtir placé bien au centre de la contre-électrode en platine (pour obtenir une formation de dépôt homogène sur toute la surface) et à une distance fixe et contrôlée de l'électrode de référence afin d'enregistrer la réponse du système à la polarisation toujours de la même manière et ainsi avoir une reproductibilité des mesures effectuées in-situ ;
1.10 : conditions d'électrodéposition préférentielles : temps = 20 min; j = - 1 mA.cm⁻² ; concentration du bain = 0,1 mole par litre ;
1.11 : A la fin de l'électrodéposition, on réalise la sortie de la pièce puis un rinçage à l'eau, suivi d'un rinçage de 30 s dans un solvant alcoolique (éthanol) et un séchage à l'air chaud (idem point 1.6) ;
1.12 : stockage 24 h minimum dans un air sec de préférence dans un dessiccateur contenant un capteur d'humidité de l'air (comme par exemple du gel de silice) ;
1.13 : traitement thermique sous atmosphère inerte d'argon pendant 1 h à 1050 °C avec une montée et une descente en température de 5 °C / min.

Les caractéristiques de la couche de revêtement ainsi obtenue sont les suivantes:
- Morphologie et épaisseur : la couche de revêtement obtenue par électrodéposition recouvre de manière homogène la surface des substrats, avec des discontinuités sous forme de fissures, donnant lieu à un aspect type « boue séchée ». La distribution des fissures est aléatoire, la largeur de ces fissures est comprise entre 1 et 25 µm, et la distance inter-fissures se situe préférentiellement entre 5 et 50 µm. Les fissures peuvent être traversantes de manière totale ou partielle sur toute l'épaisseur de la couche de revêtement. L'épaisseur de la couche de revêtement doit être comprise entre 1 et 100 µm. Sous la couche de revêtement à base d'oxyde de terre rare, des couches sous-jacentes résultant de la réaction du dépôt avec le substrat peuvent également apparaître. Leur épaisseur ne dépassera pas celle de la couche de revêtement.
- Composition : les couches de revêtement comprennent entre 0,10 et 35 % atomique d'éléments type lanthanide et/ou d'yttrium et/ou de zirconium et/ou d'hafnium, entre 0,5 et 75 % atomique d'oxygène et entre 0,5 et 30 % atomique d'azote.
- Structure cristalline : Avant traitement thermique, les couches de revêtement comprennent des phases cristallines d'oxydes, hydroxydes, de nitrates ou de leurs combinaisons d'élément lanthanide et/ou d'yttrium et/ou de zirconium et/ou d'hafnium et une fraction de phases amorphes. Après traitement thermique, toute la couche de revêtement est cristallisée.
- Microstructure : La microstructure des couches de revêtement comprend des formes allongées (type aiguilles), des formes arrondies (type protubérance sphérique ou choux-fleur), des formes type rose des sables et des formes en plaquettes. Leur taille n'excède pas la distance inter-fissures.
- Défauts : Les couches de revêtement comprennent, en proportions variables (0,5-75%), des défauts type lacunes anioniques et cationiques.

### EXEMPLE 2

On réalise une couche de revêtement CeO₂₋ₓ sur un substrat d'aluminiure de nickel (ou sur un autre type d'aluminiure).

On réalise la même préparation du bain électrolytique que dans l'exemple 1.

Maintenant, le substrat sur lequel la couche de revêtement à base d'oxyde de terre rare est électrodéposée consiste en un matériau intermétallique (massif *-bulk-* ou revêtement) de type aluminiure contenant entre 5 et 95 at. % d'Al, la différence jusqu'au 100% comporte un ou plusieurs éléments métallique/s (notamment Ni, Fe, Ti, Pt, Co, Cr, Si, Ru).

Si le substrat est un massif, un protocole de préparation de surface identique aux alliages ou superalliages à base Ni peut être appliqué. Si le substrat est un revêtement en aluminiure, aucun traitement de préparation de surface n'est nécessaire à l'exception du dégraissage et de la fixation comme décrits dans les points 1.6 et 1.7.

On met en oeuvre le même procédé d'électrodéposition que celui décrit précédemment en relation avec l'exemple 1 (étape 1.10). Eventuellement, en raison de la différence d'activité électrochimique des aluminiures par rapport à celles des alliages à base nickel, les conditions d'électrodéposition seront de préférence un temps d'immersion de 20 minutes, avec une densité de courant, j = -0,5 mA.cm⁻², en particulier si le substrat est un composé de type NiAl. Si la teneur en Ni (ou du métal) de l'aluminiure augmente (par exemple dans le composé Ni₃Al), la densité de courant peut être augmentée, de préférence à -0,75 mA.cm⁻².

Les étapes suivant l'électrodéposition sont similaires à celles mises en oeuvre pour les alliages ou superalliages à base Ni (étapes 1.11 à 1.13)

Les caractéristiques de la couche de revêtement ainsi obtenue sont les mêmes que celles décrites en relation avec l'exemple 1.

### EXEMPLE 3

On réalise une couche de revêtement CeO₂₋ₓ sur un substrat (matériau de la pièce ou sous-couche du revêtement) à base de platine.

Toute la procédure reste similaire à celle décrite pour les alliages et superalliages à base de Ni (Exemple 1) à l'exception de la préparation de surface (étape 1.5) : dans ce cas on ne réalise pas de préparation particulière de la surface (pas de sablage, ni polissage mécanique ni électropolissage ou tout autre traitement qui puisse conduire à la perte de platine). Cependant, les étapes de dégraissage et de séchage (étape 1.6) restent similaires.

On met en oeuvre le même procédé d'électrodéposition que celui décrit pour les substrats base nickel en relation avec l'exemple 1 (étape 1.10). Mais les conditions de dépôt seront de préférence : t = 20 min et j = - 0,75 mA.cm⁻².

Les caractéristiques de la couche de revêtement ainsi obtenue sont les mêmes que celles décrites en relation avec l'exemple 1.

### EXEMPLE 4

On réalise une couche de revêtement CeO₂₋ₓ sur un substrat de siliciure de nickel (ou sur un autre type de siliciure).

On réalise la même préparation du bain électrolytique que dans l'exemple 1.

Le substrat sur lequel la couche de revêtement à base d'oxyde de terre rare est électrodéposée consiste en un matériau intermétallique (massif *-bulk-* ou revêtement) de type siliciure contenant entre 5-95 at. % La différence jusqu'à 100% consiste en un ou plusieurs éléments métallique/s (notamment Mo et Fe).

La procédure est similaire à celle utilisée pour les aluminiures (exemple 2) et les conditions d'électrodéposition les plus favorables sont : temps de 20 min et densité de courant j= -1,5 mA.cm⁻².

Les caractéristiques de la couche de revêtement ainsi obtenue sont les mêmes que celles décrites en relation avec l'exemple 1.

### EXEMPLE 5

On réalise une couche de revêtement CeO₂₋ₓ sur un substrat formé d'un matériau composite présentant un minimum de conductivité électronique.

Le substrat peut être constitué de n'importe quel matériau composite ayant un minimum de conductivité électronique (par exemple, un « cermet » avec une matrice de Co et un renfort de carbure de tungstène).

Si le matériau composite possède une matrice métallique (ex : le cermet Co - WC), on peut employer les mêmes protocoles que ceux décrits précédemment pour les alliages ou superalliages à base de Ni (exemple 1) mais de préférence avec application d'une densité de courant de -1,5 mA.cm⁻², pendant 20 minutes.

Si le matériau composite possède une matrice organique, on peut employer les mêmes protocoles que ceux décrits précédemment pour les alliages ou superalliages à base de Ni (exemple 1) avec les modifications suivantes a) à d) :
a) pas de préparation de surface (sablage) ;
b) dégraissage seulement avec un mélange alcool-eau ;
c) densités de courant de - 2,0 mA.cm⁻² de préférence, pendant 20 minutes ;
d) avec un traitement thermique à une température qui est de l'ordre de deux tiers la température de fusion du composé à plus faible point de fusion du matériau composite ;

Si le matériau composite possède une matrice céramique, on peut employer les mêmes protocoles que ceux décrits précédemment pour les aluminiures (exemple 2) avec les modifications suivantes a) et b) :
a) l'application d'une densité de courant de -3,0 mA.cm⁻², de préférence, pendant 30 minutes,
b) même traitement thermique mais avec une température de 1100°C.

Les caractéristiques de la couche de revêtement ainsi obtenue sont les mêmes que celles décrites en relation avec l'exemple 1.

## Revendications

1. Méthode de fabrication d'une barrière thermique comprenant une couche de revêtement céramique et recouvrant au moins une partie de la surface d'un substrat, dans lequel la couche de revêtement céramique est déposée sur le substrat uniquement par un procédé d'électrodéposition cathodique entre au moins une cathode (26) et une anode (28), le substrat étant formé dans un matériau conducteur des électrons et constituant la cathode, appartenant au groupe comprenant les superalliages, les superalliages à base de nickel, les superalliages à base de cobalt, le titane et ses alliages, les composés intermétalliques à base d'aluminiures et/ou de siliciures, les composites à matrice métallique, les composites à matrice céramique et les composites à matrice organique,
**caractérisée en ce que** l'électrolyte (24) comprend au moins un sel parmi le groupe comprenant les sels de lanthanides, d'yttrium, de zirconium et d'hafnium de sorte que par le procédé d'électrodéposition la couche de revêtement comporte au moins un oxyde parmi le groupe comprenant les oxydes de lanthanides, d'yttrium, de zirconium et d'hafnium et **en ce qu'**elle comprend en outre une étape de traitement thermique de la couche de revêtement céramique entre 400°C et 2000°C pendant une durée d'au moins 10 minutes.

2. Méthode de fabrication selon la revendication 1 , **caractérisée en ce que** ledit électrolyte (24) comporte au moins deux sels parmi le groupe comprenant les sels de lanthanides, d'yttrium, de zirconium et d'hafnium de sorte que par le procédé d'électrodéposition la couche de revêtement comporte au moins deux oxydes parmi le groupe comprenant les oxydes de lanthanides, d'yttrium, de zirconium et d'hafnium.

3. Méthode de fabrication selon la revendication 1 ou 2, **caractérisée en ce que** ledit électrolyte (24) comporte au moins du sel de cérium de sorte que par le procédé d'électrodéposition la couche de revêtement comporte au moins de l'oxyde de cérium.

4. Méthode de fabrication selon l'une quelconque des revendications précédentes, **caractérisée en ce que** les sels de lanthanides, d'yttrium, de zirconium et d'hafnium se présentent initialement dans l'électrolyte (24) à une concentration comprise entre 0,05 et 5 moles par litre.

5. Méthode de fabrication selon l'une quelconque des revendications précédentes, **caractérisée en ce que** l'électrolyte (24) comprend des sels de nitrate en concentration supérieure ou égale à 0,05 mole par litre.

6. Méthode de fabrication selon l'une quelconque des revendications précédentes, **caractérisée en ce que** le pH de l'électrolyte (24) est inférieur à 7, de préférence entre 2,5 et 5,5.

7. Méthode de fabrication selon l'une quelconque des revendications précédentes, **caractérisée en ce que** le procédé d'électrodéposition dure au plus 1 heure.

8. Méthode de fabrication selon l'une quelconque des revendications précédentes, **caractérisée en ce que** le procédé d'électrodéposition utilise une électrode de référence (30).

9. Méthode de fabrication selon l'une quelconque des revendications précédentes, **caractérisée en ce que** le procédé d'électrodéposition est effectué par application d'une densité de courant entre la cathode (26) et l'anode (28).

10. Méthode de fabrication selon la revendication 9, **caractérisée en ce que** la densité de courant appliquée est comprise entre -0,5 et -5 mA/cm² (milliampère par centimètre carré).

11. Méthode de fabrication selon l'une quelconque des revendications 1 à 10, **caractérisée en ce que** le procédé d'électrodéposition est effectué par application d'une tension entre la cathode (26) et l'anode (28).

12. Méthode de fabrication selon la revendication 11, **caractérisée en ce que** la tension appliquée est comprise entre -30 et +30 V (volts).

13. Méthode de fabrication selon l'une quelconque des revendications précédentes, **caractérisée en ce qu'**elle comprend en outre une étape de séchage de la couche de revêtement.

14. Méthode de fabrication selon l'une quelconque des revendications précédentes **caractérisée en ce que** le traitement thermique est réalisé sous pression atmosphérique d'argon en présence d'au moins 0,0001 bar (10 pascals) d'oxygène, de préférence pendant 60 minutes à 1050 °C.

## Patentansprüche

1. Verfahren zur Herstellung einer Wärmebarriere, die eine keramische Deckschicht umfaßt und wenigstens einen Teil der Oberfläche eines Substrats bedeckt, wobei die keramische Deckschicht auf dem Substrat einzig und allein durch ein Verfahren kathodischen Galvanisierens zwischen wenigstens einer Kathode (26) und einer Anode (28) aufgebracht wird, wobei das Substrat aus einem elektronenleitenden und die Kathode bildenden Material gebildet ist, das zu der Gruppe umfassend Superlegierungen, Superlegierungen auf Nickelbasis, Superlegierungen auf Kobaltbasis, Titan und seine Legierungen, intermetallische Verbindungen auf der Basis von Aluminiden und/oder von Siliciden, Metallmatrix-Verbundwerkstoffe, Keramikmatrix-Verbundwerkstoffe sowie Verbundwerkstoffe mit organischer Matrix gehört,
**dadurch gekennzeichnet, daß** der Elektrolyt (24) wenigstens ein Salz aus der Gruppe umfassend Lanthanoid-, Yttrium-, Zirkonium- und Hafniumsalze umfaßt, so daß durch das Galvanisierungsverfahren die Deckschicht wenigstens ein Oxid aus der Gruppe umfassend Lanthanoid-, Yttrium-, Zirkonium- und Hafniumoxide enthält, und daß es ferner einen Schritt zur Wärmebehandlung der keramischen Deckschicht zwischen 400 °C und 2000 °C über eine Dauer von wenigstens 10 Minuten umfaßt.

2. Herstellungsverfahren nach Anspruch 1, **dadurch gekennzeichnet, daß** der Elektrolyt (24) wenigstens zwei Salze aus der Gruppe umfassend Lanthanoid-, Yttrium-, Zirkonium- und Hafniumsalze umfaßt, so daß durch das Galvanisierungsverfahren die Deckschicht wenigstens zwei Oxide aus der Gruppe umfassend Lanthanoid-, Yttrium-, Zirkonium- und Hafniumoxide enthält.

3. Herstellungsverfahren nach Anspruch 1 oder 2, **dadurch gekennzeichnet, daß** der Elektrolyt (24) wenigstens Cersalz umfaßt, so daß durch das Galvanisierungsverfahren die Deckschicht wenigstens Ceroxid enthält.

4. Herstellungsverfahren nach einem der vorhergehenden Ansprüche, **dadurch gekennzeichnet, daß** die Lanthanoid-, Yttrium-, Zirkonium- und Hafniumsalze anfangs in dem Elektrolyt (24) in einer Konzentration zwischen 0,05 und 5 Mol pro Liter vorliegen.

5. Herstellungsverfahren nach einem der vorhergehenden Ansprüche, **dadurch gekennzeichnet, daß** der Elektrolyt (24) Nitratsalze in einer Konzentration von über oder gleich 0,05 Mol pro Liter umfaßt.

6. Herstellungsverfahren nach einem der vorhergehenden Ansprüche, **dadurch gekennzeichnet, daß** der pH-Wert des Elektrolyts (24) unter 7, vorzugsweise zwischen 2,5 und 5,5 liegt.

7. Herstellungsverfahren nach einem der vorhergehenden Ansprüche, **dadurch gekennzeichnet, daß** das Galvanisierungsverfahren höchstens 1 Stunde dauert.

8. Herstellungsverfahren nach einem der vorhergehenden Ansprüche, **dadurch gekennzeichnet, daß** das Galvanisierungsverfahren eine Referenzelektrode (30) verwendet.

9. Herstellungsverfahren nach einem der vorhergehenden Ansprüche, **dadurch gekennzeichnet, daß** das Galvanisierungsverfahren durch Anlegen einer Stromdichte zwischen der Kathode (26) und der Anode (28) durchgeführt wird.

10. Herstellungsverfahren nach Anspruch 9, **dadurch gekennzeichnet, daß** die angelegte Stromdichte zwischen -0,5 und -5 mA/cm² (Milliampere pro Quadratzentimeter) beträgt.

11. Herstellungsverfahren nach einem der Ansprüche 1 bis 10, **dadurch gekennzeichnet, daß** das Galvanisierungsverfahren durch Anlegen einer Spannung zwischen der Kathode (26) und der Anode (28) durchgeführt wird.

12. Herstellungsverfahren nach Anspruch 11, **dadurch gekennzeichnet, daß** die angelegte Spannung zwischen -30 und +30 V (Volt) beträgt.

13. Herstellungsverfahren nach einem der vorhergehenden Ansprüche, **dadurch gekennzeichnet, daß** es ferner einen Schritt zum Trocknen der Deckschicht umfaßt.

14. Herstellungsverfahren nach einem der vorhergehenden Ansprüche, **dadurch gekennzeichnet, daß** die Wärmebehandlung unter atmosphärischem Argondruck in Gegenwart von wenigstens 0,0001 bar (10 Pascal) Sauerstoff, vorzugsweise über 60 Minuten bei 1050 °C durchgeführt wird.

## Claims

1. A method of fabricating a thermal barrier comprising a ceramic coating layer covering at least a portion of the structure of a substrate, wherein the ceramic coating layer is deposited on the substrate solely by a cathodic electrodeposition process between at least one cathode (26) and at least one anode (28), the substrate being formed of an electron-conducting material and constituting the cathode, said substrate is formed in a material belonging to the group comprising superalloys, nickel-based superalloys, cobalt-based superalloys, titanium and alloys thereof, intermetallic compounds based on aluminides and/or silicides, metal-matrix composites, ceramic-matrix composites, and organic-matrix composites, the method being **characterized in that** the electrolyte (24) includes at least one salt from the group comprising the salts of lanthanides, of yttrium, of zirconium, and of hafnium, such that the coating layer applied by the electrodeposition process includes at least one oxide from the group comprising the oxides of lanthanides, of yttrium, of zirconium, and of hafnium, and **in that** it also includes a step of heat treating the ceramic coating layer at a temperature lying in the range 400°C to 2000°C for a duration of at least 10 min.

2. A fabrication method according to claim 1, **characterized in that** said electrolyte (24) includes at least two salts from the group comprising the salts of lanthanides, of yttrium, of zirconium, and of hafnium, such as the coating layer applied by the electrodeposition process includes at least two oxides from the group comprising the oxides of lanthanides, of yttrium, of zirconium, and of hafnium.

3. A fabrication method according to claim 1 or claim 2, **characterized in that** said electrolyte (24) includes at least one cerium salt such that the coating layer applied by the electrodeposition process includes at least cerium oxide.

4. A fabrication method according to any preceding claim, **characterized in that** the salts of lanthanides, of yttrium, of zirconium, and of hafnium are initially present in the electrolyte (24) at a concentration lying in the range 0.05 mol/L to 5 mol/L.

5. A fabrication method according to any preceding claim, **characterized in that** the electrolyte (24) includes nitrate salts at a concentration greater than or equal to 0.05 mol/L.

6. A fabrication method according to any preceding claim, **characterized in that** the pH of the electrolyte (24) is less than 7, preferably lying in the range 2.5 to 5.5.

7. A fabrication method according to any preceding claim, **characterized in that** the electrodeposition process lasts for no more than 1 h.

8. A fabrication method according to any preceding claim, **characterized in that** the electrodeposition process uses a reference electrode (30).

9. A fabrication method according to any preceding claim, **characterized in that** the electrodeposition process is performed by applying a current density between the cathode (26) and the anode (28).

10. A fabrication method according to claim 9, **characterized in that** the current density applied lies in the range -0.5 mA/cm² to -5 mA/cm².

11. A fabrication method according to any one of claims 1 to 10, **characterized in that** the electrodeposition process is performed by applying a voltage between the cathode (26) and the anode (28).

12. A fabrication method according to claim 11, **characterized in that** the applied voltage lies in the range -30 V to +30 V.

13. A fabrication method according to any preceding claim, **characterized in that** it further includes a step of drying the coating layer.

14. A fabrication method according to any preceding claim, **characterized in that** the heat treatment was performed under argon at atmospheric pressure in the presence of at least 0.0001 bar (10 Pa) of oxygen, preferably for 60 min at 1050°C.
